Europäisches Patentamt

European Patent Office

Office européen des brevets

(19)

(11) Numéro de publication : **0 333 526 B1**

(12) # FASCICULE DE BREVET EUROPEEN

(45) Date de publication du fascicule du brevet :
**03.04.91 Bulletin 91/14**

(51) Int. Cl.⁵ : **F16K 21/10**

(21) Numéro de dépôt : **89400316.9**

(22) Date de dépôt : **03.02.89**

(54) Perfectionnements aux robinets à fermeture temporisée.

(30) Priorité : **18.03.88 FR 8803499**

(43) Date de publication de la demande :
**20.09.89 Bulletin 89/38**

(45) Mention de la délivrance du brevet :
**03.04.91 Bulletin 91/14**

(84) Etats contractants désignés :
**AT BE CH DE ES GB GR IT LI LU NL SE**

(56) Documents cités :
**BE-A- 563 244**
**FR-A- 2 391 406**

(73) Titulaire : **LES ROBINETS PRESTO Société anonyme dite:**
**7, rue Racine**
**F-92120 Montrouge (FR)**

(72) Inventeur : **Dutheil, Daniel**
**12 Allée des Mimosas**
**F-17132 Mescheres (FR)**

(74) Mandataire : **Vander-Heym, Serge et al**
**CABINET R. VANDER-HEYM 172, Boulevard Voltaire**
**F-75011 Paris (FR)**

## Description

La présente invention est relative à des perfectionnements aux robinets à fermeture temporisée.

On connaît des robinets dont le clapet est porté par un piston susceptible de se déplacer dans une chambre communiquant avec l'arrivée d'eau, par l'entremise d'un orifice calibré comme défini dans le préambule de la revendication 1 connu du FR-A-2391406.

Lors de l'ouverture du robinet, on repousse le piston dans la chambre en chassant le volume d'eau qu'elle contient, ce qui a pour effet de soulever le clapet. Dès le soulèvement du clapet, l'eau pénètre dans la chambre de temporisation par l'entremise de l'orifice calibré précité et repousse progressivement le clapet contre son siège.

On comprend dès lors que le temps de temporisation dépend essentiellement du diamètre de l'orifice calibré.

Pour éviter l'obstruction de l'orifice calibré par des dépôts quelconques, celui-ci est traversé par une tige pouvant se déplacer axialement par rapport audit orifice.

La conception des robinets actuels est telle qu'à chaque manoeuvre de ceux-ci la tige précitée effectue un mouvement de va et vient à travers l'orifice calibré et les frottements qui en résultent entraînent une usure qui se traduit par une augmentation du diamètre dudit orifice. De ce fait, l'eau pénètre plus facilement dans la chambre de temporisation et le clapet est repoussé contre son siège plus tôt que désiré.

Ce phénomène est encore amplifié par le fait que la tige est généralement métallique alors que le trou calibré est réalisé dans une pièce en matière plastique.

La présente invention, qui remédie à ces inconvénients, est remarquable en ce que le trou calibré est prévu dans une petite pastille, réalisée en une matière très dure, tel que du rubis par exemple, maintenue sur la pièce usuelle.

L'invention sera mieux comprise par la description qui va suivre, faite en se référant au dessin annexé à titre d'exemple indicatif seulement, sur lequel :

La figure 1 est une vue en coupe d'une tête usuelle de robinet comportant le dispositif de l'invention (le corps du robinet n'est pas représenté) ;

La figure 2 est une vue, à plus grande échelle, du détail A de la figure 1.

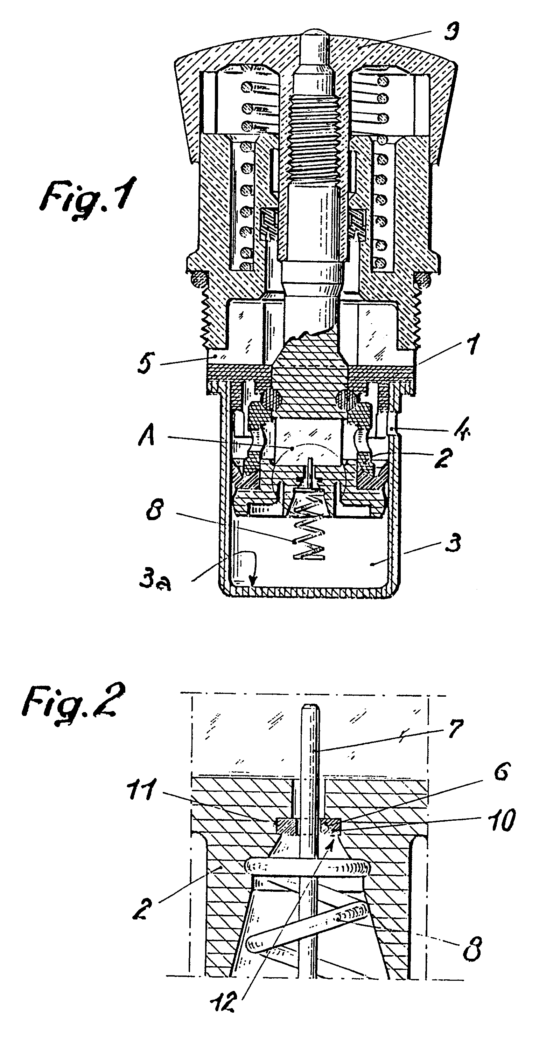

En se reportant au dessin, on voit que la tête de robinet comporte un clapet 1, porté par un piston 2 pouvant être déplacé dans une chambre de temporisation 3.

L'eau pénètre dans la tête par les orifices 4 et en ressort par ceux 5, ou inversement.

Le piston 2 comporte un orifice calibré 6, faisant communiquer l'arrivée d'eau et la chambre de temporisation 3, dans lequel peut se déplacer une tige 7.

De la façon connue, la tige 7 constitue le prolongement axial de l'extrémité d'un ressort 8, à roulement hélicoïdal, dont l'autre extrémité est fixée au piston.

En enfonçant le poussoir 9, le piston se déplace dans la chambre de temporisation 3, l'eau étant alors chassée par la périphérie dudit piston, et l'extrémité libre du ressort 8 prend appui contre le fond 3a de la chambre de temporisation 3 et la tige 7 se déplace dans l'orifice 6.

Lorsque le piston se déplace en sens inverse, poussé par la pression de l'eau qui pénètre dans la chambre par l'orifice 6, le ressort se détend et la tige 7 est déplacée en sens inverse de celui dudit piston.

Selon l'invention, l'orifice calibré est prévu sur une petite pastille 10, réalisée en une matière dure maintenue sur le piston 2.

De préférence, la pastille 10 est réalisée en rubis synthétique.

Un logement 11 est prévu sur le piston 2 dans lequel la pastille 10 est engagée à force.

Comme le piston 2 est généralement réalisé en matière plastique, l'élasticité de celle-ci est suffisante pour maintenir la pastille précitée et assurer l'étanchéité. Pour améliorer le maintien de cette dernière, toutefois, le logement 11 peut présenter à sa périphérie un petit bourrelet 12 de rétention.

Pour fixer les idées, il faut préciser que le diamètre de la pastille 10 est de l'ordre de 1,5 mm et que son épaisseur ne dépasse pas 0,5 mm, le diamètre de l'orifice 6 étant voisin, lui aussi, de 0,5 mm.

## Revendications

1. Robinet à fermeture temporisée du genre de ceux où le clapet est porté par un piston (2) susceptible de se déplacer de manière étanche dans une chambre de temporisation (3) communiquant avec l'arrivée d'eau alimentée par l'intermédiaire d'un orifice calibré prévu dans le piston, et étant ainsi réalisée du côté du piston opposé au siège du clapet une tige métallique (7), étant prévue qui peut se déplacer axialement à travers cet orifice calibré, caractérisé en ce que ledit orifice calibré est prévu dans une petite pastille (10), réalisée en une matière dure, et rapportée sur ledit piston.

2. Robinet selon la revendication 1, caractérisé en ce que ledit piston devant comporter ledit orifice calibré présente un logement dans lequel la pastille est maintenue.

## Ansprüche

1. Verschließventil mit Schließverzögerung, bei dem die Ventilklappe von einem Kolben (2) getragen wird, welcher sich dichtschließend in einer Verzögerungskammer (3) hin und herbewegen kann, die mit der Wasserzufuhr verbunden ist, welche über eine kalibrierte Öffnung in dem Kolben erfolgt und auf der der Ventilklappe gegenüberliegenden Seite angebracht ist sowie einer Metallstange (7), die sich in Achsrichtung in der kalibrierten Öffnung hin und herbewegen kann, dadurch gekennzeichnet, daß die o.a. kalibrierte Öffnung in einer kleinen Scheibe (10) vorgesehen ist, welche aus hartem Material hergestellt und an den o.a. Kolben angebaut ist.

2. Ventil nach Patentanspruch 1, dadurch gekennzeichnet, daß der o.a. Kolben mit der o.a kalibrierten Öffnung eine Aufnahme bildet, der die Scheibe (10) eingesetzt wird.

## Claims

1. Delayed closure valve of the kind in which the shutter is carried by a piston (2) capable of moving sealingly in a time delay chamber (3) communicating with the intake of water supplied via a calibrated orifice formed in the piston, and being thus formed on the side of the piston opposite the seat of the shutter, a metal rod being provided which may move axially through this calibrated orifice, characterized in that said calibrated orifice is provided in a small disc (10) made from a hard Material and fixed on said piston.

2. Valve according to claim 1, characterized in that said piston comprising said calibrated orifice has a housing in which the disk is held in position.

*Fig.1*

*Fig.2*

4